# EUROPÄISCHE PATENTSCHRIFT

(11) **EP 2 561 386 B1**
(45) Veröffentlichungstag und Bekanntmachung des Hinweises auf die Patenterteilung: **03.03.2021**
(21) Anmeldenummer: 11709948.1
(22) Anmeldetag: 23.03.2011
(51) Int. Cl.: G02B 6/00

(54) **FLÄCHENLICHTLEITER UND FLÄCHENSTRAHLER**
SURFACE LIGHT GUIDE AND PLANAR EMITTER
GUIDE DE LUMIÈRE PLAN ET PROJECTEUR PLAT

(30) Priorität: 23.04.2010 DE 102010018034
(43) Veröffentlichungstag der Anmeldung: 27.02.2013
(73) Patentinhaber: OSRAM Opto Semiconductors GmbH, 93055 Regensburg (DE)
(72) Erfinder: BRICK, Peter, 93051 Regensburg (DE); FRANK, Joachim, 96450 Coburg (DE); KAISER, Stephan, 93049 Regensburg (DE); KUHN, Gerhard, 93096 Köfering (DE); MARKYTAN, Ales, 93055 Regensburg (DE); MUSCHAWECK, Julius, 82131 Gauting (DE); NEUGIRG, Christian, 93053 Regensburg (DE)
(74) Vertreter: Epping - Hermann - Fischer
(86) Internationale Anmeldenummer: PCT/EP2011/054467
(87) Internationale Veröffentlichungsnummer: WO 2011/131447

(56) Entgegenhaltungen:
- DE-A1-102010 018 034
- US-A1- 2006 056 166
- US-A1- 2006 244 877

## Beschreibung

Die vorliegende Anmeldung betrifft einen Flächenlichtleiter und einen Flächenstrahler mit zumindest einem Flächenlichtleiter.

Diese Patentanmeldung beansprucht die Priorität der deutschen Patentanmeldung 10 2010 018 034.3, deren Offenbarungsgehalt hiermit durch Rückbezug aufgenommen wird.

Strahlungsquellen, beispielsweise Leuchtdioden (LEDs), weisen meist eine vergleichsweise geringe Strahlungsaustrittsfläche auf. Zur Vergrößerung der Strahlungsaustrittsfläche kann die von der Strahlungsquelle erzeugte Strahlung in eine Diffusorplatte eingekoppelt werden. Allerdings kann dies zu einer vergleichsweise inhomogenen Leuchtdichte auf der Strahlungsaustrittsfläche, insbesondere hinsichtlich des Farborts und des Abstrahlungswinkels, führen.

Eine Aufgabe ist es, eine großflächige Abstrahlung bei gleichzeitig hoher Homogenität zu erzielen.

Diese Aufgabe wird durch einen Flächenlichtleiter gemäß Patentanspruch 1 und durch einen Flächenstrahler mit zumindest einem solchen Flächenlichtleiter gelöst. Weitere Ausgestaltungen und Zweckmäßigkeiten sind Gegenstand der abhängigen Patentansprüche.

Die Druckschrift US 2006/0244877 A1 beschreibt ein LCD Bauteil und eine Lichtleiterplatte und die Druckschrift US 2006/0056166 beschreibt eine LCD Beleuchtung.

Ein Flächenlichtleiter weist eine entlang einer Haupterstreckungsebene des Flächenlichtleiters verlaufende Strahlungsaustrittsfläche und einen Lichtleitbereich auf. Der Lichtleitbereich weist Streustellen und eine auf einer ersten Hauptfläche des Lichtleitbereichs angeordnete Beschichtung auf. Eine entlang der Haupterstreckungsebene eingekoppelte und nach Streuung an den Streustellen auf die erste Hauptfläche auftreffende Strahlung weist einen überhöhten Strahlungsanteil auf. Die Beschichtung reduziert gezielt einen Austritt des überhöhten Strahlungsanteils aus der Strahlungsaustrittsfläche.

Unter einem überhöhten Strahlungsanteil wird insbesondere ein Anteil der Strahlung verstanden, der im Fall einer vollständigen oder zumindest im Wesentlichen vollständigen Auskopplung aus der Strahlungsaustrittsfläche zu einer Abstrahlcharakteristik, etwa bezogen auf die spektrale und/oder winkelabhängige Abstrahlung, führen würde, die von einer dem Flächenlichtleiter vorgegebenen Abstrahlcharakteristik, beispielsweise einer homogenen Abstrahlcharakteristik, abweicht.

Mit anderen Worten können mittels der Beschichtung unerwünschte Strahlungsanteile, beispielsweise solche Strahlungsanteile, die eine inhomogene Abstrahlung des Flächenlichtleiters verursachen würden, verringert werden, sodass die ausgekoppelte Strahlung insgesamt eine hohe Homogenität aufweist. Mittels der Beschichtung ist also die Homogenität der Leuchtdichte der austretenden Strahlung gegenüber einem Flächenlichtleiter ohne eine solche Beschichtung erhöht.

Die Homogenität bezieht sich hierbei insbesondere auf die Leuchtdichteverteilung auf der Strahlungsaustrittsfläche, auf die Leuchtdichteverteilung in Abhängigkeit vom Winkel der abgestrahlten Strahlung und/oder auf die Leuchtdichteverteilung in Abhängigkeit von der Wellenlänge für verschiedene Punkte auf der Strahlungsaustrittsfläche.

Als ein Maß für die farbliche Homogenität kann für zwei beliebige Punkte auf der Strahlungsaustrittsfläche der Farbort für einen vorgegebenen Winkel im Farbdiagramm (CIE-Diagramm) aufgetragen werden. Vorzugsweise liegen diese Punkte innerhalb einer 5-step-McAdam-Ellipse, besonders bevorzugt innerhalb einer 3-step-McAdam-Ellipse.

Unter einer gezielten Verringerung wird insbesondere verstanden, dass die Verringerung, etwa mittels Reflexion, zur Beeinflussung der Leuchtdichte der aus der Strahlungsaustrittsfläche austretenden Strahlung vorgesehen ist. Eine lediglich fertigungsbedingte Restabsorption einer strahlungsdurchlässig ausgebildeten Schicht wird dagegen nicht als gezielte Verringerung angesehen.

Der überhöhte Strahlungsanteil kann ein Winkelbereich sein. In diesem Winkelbereich weist die Beschichtung vorzugsweise eine gegenüber einem weiteren Winkelbereich verringerte Durchlässigkeit auf.

Eine Ausdehnung der Streustellen ist groß gegenüber der Wellenlänge der in den Flächenlichtleiter eingekoppelten Strahlung im Lichtleitbereich, beispielsweise mindestens fünffach so groß wie eine Peak-Wellenlänge der eingekoppelten Strahlung, wobei sich die Wellenlänge hier auf die Wellenlänge in dem Material bezieht.

Eine Streuung an derartigen Streustellen weist im sichtbaren Spektralbereich eine nur vergleichsweise geringe Abhängigkeit von der Wellenlänge der gestreuten Strahlung auf. Mittels solcher Streustellen ist daher eine Homogenität des Farborts der austretenden Strahlung erzielbar.

Ferner bewirkt die Streuung solchen Streustellen im Mittel nur vergleichsweise geringe Änderungen der Propagationsrichtung der Strahlung und wird daher auch als Vorwärtsstreuung bezeichnet. Dies kann dazu führen, dass ein vergleichsweise großer Anteil der in dem Lichtleitbereich propagierenden Strahlung auch nach der Streuung an Streustellen in vergleichsweise großen Auftreffwinkeln zu einer Normalen des Flächenlichtleiters verläuft. Große Auftreffwinkel sind insbesondere solche Winkel, bei denen die Strahlung nur knapp unterhalb des Grenzwinkels für Totalreflexion auf die erste Hauptfläche des Flächenlichtleiters auftrifft. Dieser Strahlungsanteil würde in Abwesenheit der Beschichtung zu einem überhöhten Strahlungsanteil führen, der in großen Austrittswinkeln, beispielsweise Winkeln von 50° oder mehr zur Normalen des Flächenlichtleiters, aus der Strahlungsaustrittsfläche austreten würde, wodurch sich die Homogenität der Leuchtdichte bezogen auf den Abstrahlwinkel verringern würde.

Mit anderen Worten ist die Beschichtung derart ausgeführt, dass Strahlung, die unter einem Winkel, der nahe dem Totalreflexionsgrenzwinkel liegt, auf die erste Hauptfläche auftrifft, zu einem erhöhten Anteil in den Lichtleitbereich zurückreflektiert wird. Nach einer weiteren Streuung an einer Streustelle kann die Strahlung unter einem kleineren Winkel aus der Strahlungsaustrittsfläche des Flächenlichtleiters austreten. Mittels der Beschichtung kann also im Vergleich zu einer unbehandelten Lichtleiter-Luft-Grenzfläche die Homogenität der Abstrahlung bezüglich der Winkelverteilung erhöht werden. Eine großflächige und gleichzeitig homogene Abstrahlung ist so realisiert.

Alternativ oder ergänzend kann der überhöhte Strahlungsanteil ein Wellenlängenbereich sein, beispielsweise Strahlung im blauen Spektralbereich. Die Beschichtung weist vorzugsweise in diesem Wellenlängenbereich eine gegenüber einem weiteren Wellenlängenbereich verringerte Durchlässigkeit, beispielsweise aufgrund einer erhöhten Reflektivität, auf.

In diesem Fall ist eine Ausdehnung vorzugsweise klein gegenüber der Wellenlänge der im Lichtleitbereich umlaufenden Strahlung, beispielsweise mindestens fünfmal kleiner als eine Peak-Wellenlänge der Strahlung im Lichtleitbereich. An solchen Streustellen tritt überwiegend Rayleigh-Streuung auf.

Rayleigh-Streuung zeichnet sich durch eine sehr breite Streuwinkelverteilung aus, so dass auch große Streuwinkel bis hin zur Rückwärtsstreuung auftreten. Eine homogene Leuchtdichteverteilung bezogen auf den Abstrahlwinkel kann so vereinfacht erzielt werden.

Weiterhin ist bei Rayleigh-Streuung die Streuwirkung proportional zur vierten Potenz der Frequenz der Strahlung. Strahlung im blauen Spektralbereich wird also mit einer höheren Effizienz an den Streustellen gestreut als Strahlung im roten Spektralbereich. In Abwesenheit der Beschichtung würde dies dazu führen, dass Strahlung im blauen Spektralbereich zu einem größeren Anteil aus dem Flächenlichtleiter ausgekoppelt würde als Strahlung im roten Spektralbereich.

Die Beschichtung kann also derart ausgeführt sein, dass sie eine wellenlängenabhängige Streuwirkung der Streustellen kompensiert.

Unter Streustellen werden im Rahmen der Anmeldung allgemein Stellen im Lichtleitbereich verstanden, bei denen Brechungsindexinhomogenitäten eine Streuung der auftreffenden Strahlung bewirken können.

In einer bevorzugten Ausgestaltung sind die Streustellen mittels Partikeln, beispielsweise Diffusor-Partikeln, gebildet. Die Partikel können massiv oder als Hohlpartikel, etwa als luftgefüllte Partikel, ausgeführt sein.

Alternativ oder ergänzend können die Streustellen mittels Hohlräumen oder Defekten im Lichtleitbereich gebildet sein.

Hohlräume oder Defekte im Lichtleitbereich sind thermisch und/oder optisch, beispielsweise mittels gezielten lokalen Erhitzens des Lichtleitbereichs, etwa mittels Laserstrahlung, herstellbar.

In einer weiteren bevorzugten Ausgestaltung ist auf der der Strahlungsaustrittsfläche abgewandten Seite des Lichtleitbereichs eine Reflektorschicht ausgebildet.

Die Reflektorschicht kann insbesondere für die im Lichtleitbereich propagierende Strahlung breitbandig reflektierend ausgebildet sein. Vorzugsweise enthält die Reflektorschicht ein Metall oder eine metallische Legierung oder besteht aus einem solchen Material. Mittels der Reflektorschicht kann ein erhöhter Anteil der eingekoppelten Strahlung seitens der Strahlungsaustrittsfläche ausgekoppelt werden, so dass die Strahlung vollständig oder zumindest überwiegend einseitig aus dem Flächenlichtleiter austritt.

Die Reflektorschicht ist vorzugsweise Lichtleitbereich beabstandet ausgebildet. So wird nur derjenige Strahlungsanteil, der bereits aus dem Lichtleitbereich ausgetreten ist, an der Reflektorschicht in Richtung der Strahlungsaustrittsfläche umgelenkt. Für nicht austretende Strahlungsanteile kann dagegen eine verlustfreie Totalreflexion erfolgen. Davon abweichend kann die Reflektorschicht auch unmittelbar an den Lichtleitbereich angrenzen.

In einer weiteren bevorzugten Ausgestaltung ist der Flächenlichtleiter im ausgeschalteten Zustand transparent ausgebildet. In diesem Zusammenhang wird unter Transparenz verstanden, dass die Summe aus spekularer Reflexion und spekularer Transmission möglichst nah an dem theoretisch für den Fall völlig fehlender Absorptions- und Streuverlusten erreichbaren Wert von 100 % liegt. Vorzugsweise beträgt die Transparenz mindestens 60 %, besonders bevorzugt mindestens 80 %.

In einer weiteren bevorzugten Ausgestaltung ist auf einer der ersten Hauptfläche gegenüberliegenden zweiten Hauptfläche des Lichtleitbereichs eine weitere Beschichtung ausgebildet. Diese weitere Beschichtung kann insbesondere zumindest eines der im Zusammenhang mit der Beschichtung beschriebenen Merkmale aufweisen, wobei die Beschichtung und die weitere Beschichtung gleichartig oder voneinander verschieden ausgebildet sein können.

Alternativ oder ergänzend kann die weitere Beschichtung auch für zumindest einen Wellenlängenbereich hochreflektierend ausgebildet sein. Je höher die Reflektivität der weiteren Beschichtung ist, desto effizienter kann die Strahlung in Richtung der Strahlungsaustrittsfläche umgelenkt werden.

In einer weiteren bevorzugten Ausgestaltung ist auf der der Strahlungsaustrittsfläche gegenüberliegenden Seite des Flächenlichtleiters eine weitere Strahlungsaustrittsfläche ausgebildet. Die Strahlung kann also auch beidseitig aus dem Flächenlichtleiter ausgekoppelt werden.

In einer bevorzugten Weiterbildung ist die aus der weiteren Strahlungsaustrittsfläche austretende Strahlung hinsichtlich der Intensität und/oder des Farborts von der aus der Strahlungsaustrittsfläche austretenden Strahlung verschieden. Beispielsweise kann der Flächenlichtleiter so ausgestaltet sein, dass durch die Strahlungsaustrittsfläche warmweiß erscheinendes Licht und durch die weitere Strahlungsaustrittsfläche kaltweiß erscheinendes Licht austritt oder umgekehrt.

Die Beschichtung ist vorzugsweise als eine mehrschichtige dielektrische Beschichtung ausgeführt. Insbesondere eignen sich dielektrische Materialien, die für die im Lichtleitbereich propagierende Strahlung eine hohe Durchlässigkeit aufweisen.

Mittels dielektrischer Schichtfolgen können auf einfache und effiziente Weise unterschiedliche Transmissionsbeziehungsweise Reflexionseigenschaften, etwa spektrale oder winkelabhängige Transmissions- oder Reflexionseigenschaften, erzielt werden.

Alternativ oder ergänzend kann die Beschichtung ein phosphoreszierendes Material und/oder ein elektrochromes Material enthalten. Solche Materialien weisen in reduziertem und in oxidiertem Zustand unterschiedliche Absorptionseigenschaften auf. Da solche Materialien typischerweise im sichtbaren Spektralbereich absorbierend sind, ist die Verwendung solcher Materialien insbesondere für Flächenlichtleiter zweckmäßig, an deren Transparenz in ausgeschaltetem Zustand geringere Anforderungen gestellt sind.

In einer bevorzugten Ausgestaltung ist die Reflektorschicht entlang der Haupterstreckungsebene des Flächenlichtleiters strukturiert. Eine Strukturgröße der Strukturierung der Reflektorschicht liegt vorzugsweise unterhalb des Auflösungsvermögens des menschlichen Auges. Die Strukturierung kann beispielsweise durch Aussparungen in der Reflektorschicht ausgebildet sein. Durch eine Variation des Flächenanteils der Aussparungen an der Gesamtfläche der Reflektorschicht ist so die vom menschlichen Auge empfundene gemittelte Reflektivität der Reflektorschicht einstellbar.

Der beschriebene Flächenlichtleiter eignet sich besonders für einen Flächenstrahler, der zumindest einen Flächenlichtleiter und zumindest eine Strahlungsquelle aufweist, wobei die im Betrieb des Flächenstrahlers in den Flächenlichtleiter eingekoppelte Strahlung mittels der Strahlungsquelle erzeugt wird.

Die Strahlungsquelle weist vorzugsweise zumindest einen Halbleiterkörper mit jeweils mindestens einem zur Erzeugung von Strahlung vorgesehenen aktiven Bereich auf. Insbesondere eignen sich als Strahlungsquelle eine Lumineszenzdiode, beispielsweise eine LED.

Weitere Merkmale, Ausgestaltungen und Zweckmäßigkeiten ergeben sich aus der folgenden Beschreibung der Ausführungsbeispiele in Verbindung mit den Figuren.

Es zeigen:
- Figur 1: ein erstes Ausführungsbeispiel für einen Flächenstrahler mit einem Flächenlichtleiter in schematischer Schnittansicht,
- Figur 2: ein zweites Ausführungsbeispiel für einen Flächenstrahler mit einem Flächenlichtleiter in schematischer Schnittansicht,
- Figur 3: ein drittes Ausführungsbeispiel für einen Flächenstrahler mit einem Flächenlichtleiter in schematischer Schnittansicht,
- Figur 4: ein viertes Ausführungsbeispiel für einen Flächenstrahler mit einem Flächenlichtleiter in schematischer Schnittansicht, und die
- Figuren 5A bis 5C: jeweils einen Verlauf der prozentualen Transmission für Strahlung mit verschiedenen Wellenlängen in Abhängigkeit vom Auftreffwinkel θ für einen konventionellen Lichtleiter mit einer Glas-Luft-Grenzfläche (Figur 5A), einen Flächenlichtleiter mit Beschichtung gemäß einem Beispiel (Figur 5B) und einem Ausführungsbeispiel (Figur 5C).

Der Begriff "Beispiel" stellt hier und im Folgenden keinen Teil der Erfindung dar und dient lediglich der besseren Verständlichkeit.

Gleiche, gleichartige oder gleich wirkende Elemente sind in den Figuren mit gleichen Bezugszeichen versehen.

Die Figuren und die Größenverhältnisse der in den Figuren dargestellten Elemente untereinander sind nicht als maßstäblich zu betrachten. Vielmehr können einzelne Elemente zur besseren Darstellbarkeit und/oder zum besseren Verständnis übertrieben groß dargestellt sein.

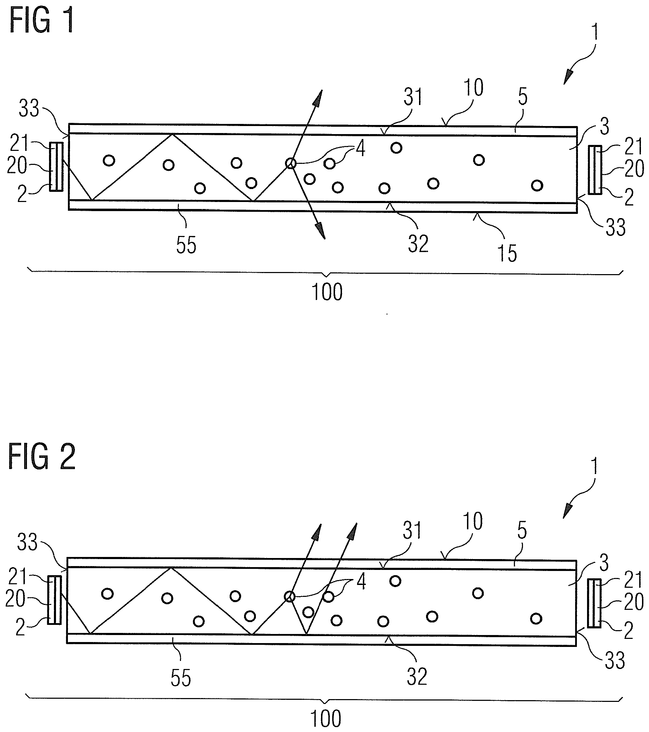

Ein erstes Ausführungsbeispiel für einen Flächenlichtleiter ist in Figur 1 schematisch in Schnittansicht dargestellt. Der Flächenstrahler weist einen Flächenlichtleiter 1 auf, dessen Strahlungsaustrittsfläche 10 entlang einer Haupterstreckungsebene des Flächenlichtleiters verläuft. Seitenflächen 33, die senkrecht zur Strahlungsaustrittsfläche 10 verlaufen, begrenzen den Flächenlichtleiter in der Haupterstreckungsebene.

Der Flächenstrahler 100 umfasst weiterhin auf beiden Seiten des Flächenlichtleiters 1 jeweils eine Strahlungsquelle 2. Die Strahlungsquellen 2 dienen jeweils als Primärstrahlungsquelle, wobei die Strahlungsaustrittsfläche 10 des Flächenlichtleiters 1 der großflächigen Abstrahlung dient. Die Strahlungsaustrittsfläche 10 ist größer als die Summe der Flächen, aus denen die Strahlung unmittelbar aus den Strahlungsquellen austritt.

Die Strahlungsquelle ist in diesem Ausführungsbeispiel als eine Lumineszenzdiode ausgeführt, die einen Halbleiterkörper 20 mit einem zur Erzeugung von Strahlung vorgesehenen aktiven Bereich 21 aufweist. Die Strahlungsquelle 2 kann auch mehr als einen Halbleiterkörper aufweisen, beispielsweise eine zeilenförmige oder matrixförmige Anordnung von mehreren Halbleiterkörpern 20. Davon abweichend kann auch eine andere Strahlungsquelle, beispielsweise eine Gasentladungslampe, Anwendung finden.

Die im Betrieb von der Strahlungsquelle 2 erzeugte Strahlung wird durch die Seitenflächen 33 entlang der Haupterstreckungsebene des Flächenlichtleiters in den Flächenlichtleiter 1 eingekoppelt. Die Strahlungsaustrittsfläche 10 ist groß gegenüber der Seitenfläche 33, so dass eine großflächige Abstrahlung der eingekoppelten Strahlung erfolgt. Der Flächenlichtleiter 1 weist einen Lichtleitbereich 3 auf, der sich in vertikaler Richtung, also senkrecht zur Haupterstreckungsebene zwischen einer ersten Hauptfläche 31 und einer zweiten Hauptfläche 32 erstreckt.

Auf der ersten Hauptfläche 31 ist eine Beschichtung 5 angeordnet. In dem Lichtleiter sind Streustellen 4 ausgebildet, an denen die im Lichtleitbereich 3 propagierende Strahlung gestreut wird.

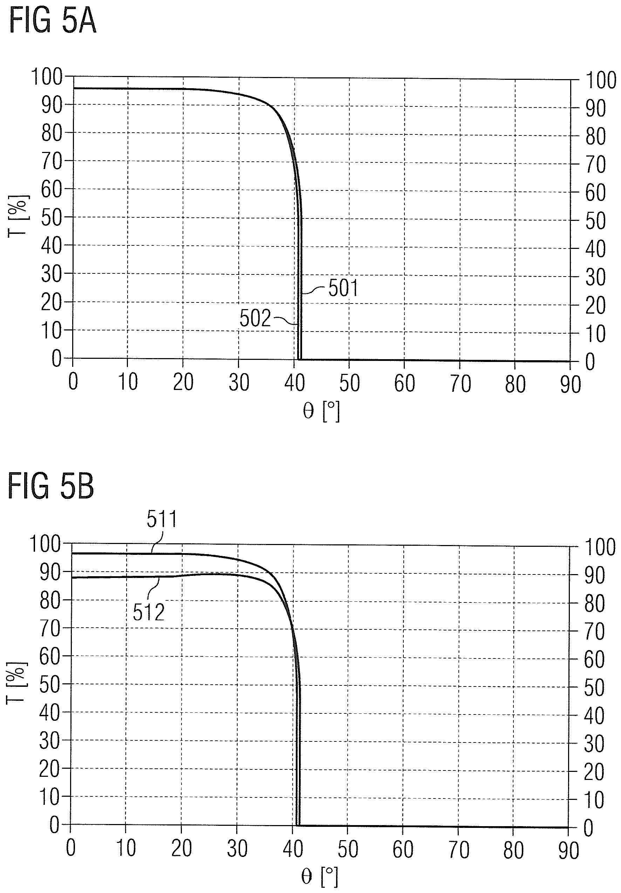

Das Zusammenwirken von Streustellen 4 und Beschichtung 5 wird im Zusammenhang mit den Figuren 5A bis 5C näher erläutert. Vorzugsweise ist sind die Beschichtung 5 und die Streustellen 4 so aufeinander abgestimmt, dass der Farbort der aus der Strahlungsaustrittsfläche austretenden Strahlung homogen ist. Für zwei beliebige Punkte auf der Strahlungsaustrittsfläche und für einen vorgegebenen Winkel liegen die Farborte im Farbdiagramm (CIE-Diagramm) vorzugsweise innerhalb einer 5-step-McAdam-Ellipse, besonders bevorzugt innerhalb einer 3-step-McAdam-Ellipse.

So ist ein Flächenstrahler 100 mit großflächiger und gleichzeitig homogener Abstrahlung realisiert.

Auf der der Strahlungsaustrittsfläche 10 gegenüberliegenden Seite des Flächenlichtleiters 1 ist eine weitere Strahlungsaustrittsfläche 15 ausgebildet. Die Strahlung kann also aus beiden Seiten des Flächenlichtleiters austreten.

Weiterhin ist auf der zweiten Hauptfläche 32 des Lichtleitbereichs 3 eine weitere Beschichtung 55 ausgebildet.

Die Beschichtung 5 und die weitere Beschichtung 55 können gleichartig ausgebildet sein.

Davon abweichend können die Beschichtungen 5, 55 auch unterschiedlich voneinander ausgebildet sein, sodass die aus der Strahlungsaustrittsfläche 10 und die aus der weiteren Strahlungsaustrittsfläche 15 austretende Strahlung hinsichtlich der Intensität und/oder des Farborts von der aus der Strahlungsaustrittsfläche austretenden Strahlung verschieden ist.

Beispielsweise können die Beschichtungen so ausgeführt sein, dass aus der Strahlungsaustrittsfläche 10 für das menschliche Auge warmweiß erscheinendes Licht und aus der Strahlungsaustrittsfläche 15 kaltweiß erscheinendes Licht austritt.

Der Flächenlichtleiter 1 ist vorzugsweise im ausgeschalteten Zustand transparent ausgebildet. Vorzugsweise beträgt die Transparenz mindestens 60 %, besonders bevorzugt mindestens 80 %.

Der Flächenlichtleiter 1, insbesondere der Lichtleitbereich 3, enthält vorzugsweise ein Glas oder einen Kunststoff, beispielsweise Polymethylmethacrylat (PMMA), Polycarbonat (PC) oder Polyurethan (PU).

Zur Verdeutlichung des Funktionsprinzips ist in Figur 1 ein möglicher Strahlenverlauf der in den Flächenlichtleiter 1 eingekoppelten Strahlung gezeigt. Nach der Einkopplung trifft die Strahlung auf die erste Hauptfläche 31 und die zweite Hauptfläche 32 jeweils in einem Winkel auf, der größer ist als der Grenzwinkel für Totalreflexion, sodass die Strahlung an diesen Hauptflächen jeweils totalreflektiert wird.

Nach dem Auftreffen auf eine Streustelle wird die Strahlung in einen Winkel umgelenkt, der kleiner ist als der Winkel für Totalreflexion, sodass die Strahlung beidseits des Flächenlichtleiters austreten kann.

Von dem beschriebenen Ausführungsbeispiel abweichend kann auch eine nur einseitige Einkopplung oder eine Einkopplung von mehr als zwei Seitenflächen in den Flächenlichtleiter 1 zweckmäßig sein.

Das in Figur 2 in schematischer Schnittansicht dargestellte zweite Ausführungsbeispiel entspricht im Wesentlichen dem im Zusammenhang mit Figur 1 beschriebenen ersten Ausführungsbeispiel. Hiervon unterscheidet es sich dadurch, dass die weitere Beschichtung 55 für zumindest einen Wellenlängenbereich hochreflektierend, beispielsweise mit einer Reflektivität von mindestens 80 %, ausgebildet ist. In diesem Ausführungsbeispiel tritt die Strahlung lediglich einseitig aus dem Flächenlichtleiter durch die Strahlungsaustrittsfläche 10 aus. Davon abweichend kann die weitere Beschichtung auch nur teilweise reflektierend ausgebildet sein, sodass ein mittels der Reflektivität einstellbarer Anteil der Strahlung auch durch die weitere Beschichtung 55 hindurch tritt.

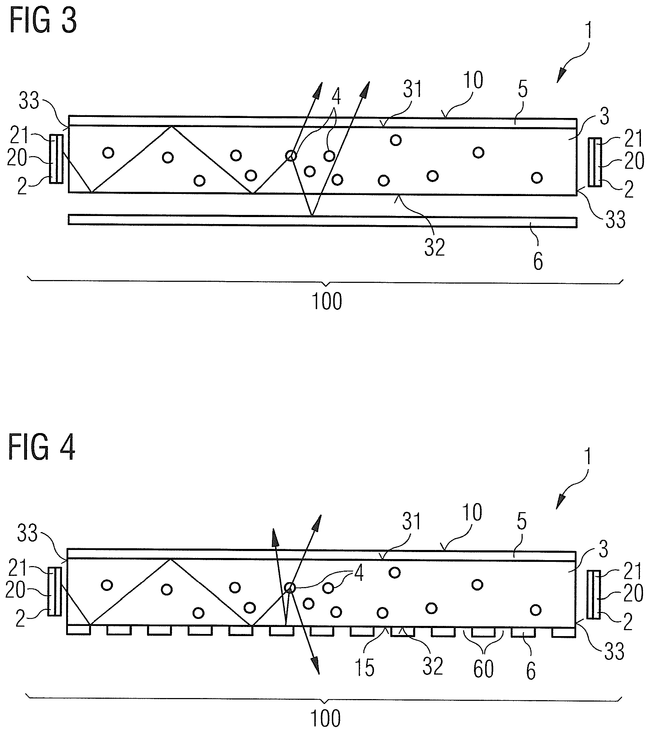

Das in Figur 3 dargestellte dritte Ausführungsbeispiel für einen Flächenstrahler 100 mit Flächenlichtleiter 1 entspricht im Wesentlichen dem im Zusammenhang mit Figur 1 beschriebenen ersten Ausführungsbeispiel. Im Unterschied hierzu weist der Flächenlichtleiter 1 lediglich auf der ersten Hauptfläche 31 eine Beschichtung 5 auf. Auf der der ersten Hauptfläche 31 gegenüberliegenden Seite ist eine Reflektorschicht 6 ausgebildet. Die Reflektorschicht ist von dem Flächenlichtleiter beabstandet ausgebildet. In diesem Fall kann die Strahlung zwar aus dem Lichtleitbereich 3 austreten, wird jedoch an der Reflektorschicht 6 in Richtung der Strahlungsaustrittsfläche 10 reflektiert und tritt durch diese nach einem weiteren Durchlauf durch den Lichtleitbereich 3 aus.

Die Reflektorschicht 6 enthält vorzugsweise ein Metall oder eine metallische Legierung oder besteht aus einem solchen Material. Beispielsweise zeichnen sich Aluminium, Silber und Rhodium durch eine breitbandige, hohe Reflektivität im sichtbaren Spektralbereich aus. Die Reflektorschicht kann beispielsweise in Form einer vorgefertigten Folie oder Platte vorliegen.

Von dem beschriebenen Ausführungsbeispiel abweichend kann auch bei Verwendung der Reflektorschicht 6 auf der zweiten Hauptfläche 32 eine weitere Beschichtung ausgebildet sein, die insbesondere wie im Zusammenhang mit Figur 1 beschrieben ausgebildet sein kann.

Das in Figur 4 dargestellte vierte Ausführungsbeispiel entspricht im Wesentlichen dem im Zusammenhang mit Figur 2 beschriebenen zweiten Ausführungsbeispiel. Im Unterschied hierzu ist auf der zweiten Hauptfläche 32 des Lichtleitbereichs 3 eine Reflektorschicht 6 angeordnet, die strukturiert ist. Die Reflektorschicht kann beispielsweise als eine reflektierende Folie ausgebildet sein, in der zur Ausbildung von Aussparungen 60 Teilbereiche entfernt sind, beispielsweise mittels Ausstanzens.

Alternativ kann die Reflektorschicht 6 auch als eine Beschichtung ausgeführt sein, bei der Teilbereiche selektiv entfernt sind, beispielsweise mittels eines photolithografischen Strukturierungsverfahrens.

Eine Strukturgröße der Strukturierung liegt vorzugsweise unterhalb des Auflösungsvermögens des menschlichen Auges. Beispielsweise sind Strukturgrößen unterhalb von 30 µm aus einem Abstand von 10 cm für das menschliche Auge nicht mehr einzeln auflösbar. Das menschliche Auge nimmt die Reflektorschicht somit als eine Schicht mit einer gemittelten Reflektivität wahr, deren Reflektivität über das Verhältnis der Gesamtfläche der Aussparungen zur Gesamtfläche der Reflektorschicht einstellbar ist.

Eine solche Strukturierung kann von dem beschriebenen Ausführungsbeispiel abweichend auch für eine, insbesondere dielektrische, Beschichtung Anwendung finden.

Somit kann für gewünschte unterschiedliche Reflektivitäten dieselbe Folie beziehungsweise dieselbe Schichtstruktur einer Beschichtung verwendet werden, wobei mittels der Strukturierung nachfolgend die Reflektivität auf den gewünschten Wert einstellbar ist.

In den Figuren 5A bis 5C sind Simulationsergebnisse für die prozentuale Transmission T in Abhängigkeit von einem Auftreffwinkel θ bezogen auf die Normale der Haupterstreckungsebene des Lichtleitbereichs dargestellt. Die Kurven 501, 511 und 521 zeigen jeweils die Simulationsergebnisse für rote Strahlung einer Vakuum-Wellenlänge von 625 nm. Die Kurven 502, 512 und 522 beziehen sich jeweils auf blaue Strahlung einer Vakuum-Wellenlänge von 460 nm.

In Figur 5A ist ein Verlauf der Transmission für eine unbehandelte Glas-Luft-Grenzfläche gezeigt. Die Transmission weist eine nur sehr geringe Wellenlängenabhängigkeit auf und beträgt bei Winkeln zwischen 0° und etwa 25° ca. 96 %. Für größere Winkel nimmt die Transmission ab und beträgt für Winkel oberhalb eines Grenzwinkels für Totalreflexion von etwa 42° 0 %.

Im Vergleich dazu zeigt Figur 5B ein Beispiel für eine Beschichtung eines Flächenlichtleiters, bei der die Transmission eine deutlich erhöhte Wellenlängenabhängigkeit aufweist. Bei senkrechtem Auftreffen (θ = 0) beträgt die Transmission für Strahlung im roten Spektralbereich etwa 97 % und für Strahlung im blauen Spektralbereich etwa 88 %. Hierbei ist die Transmission für die Strahlung im roten Spektralbereich über den gesamten Winkelbereich größer als für Strahlung im blauen Spektralbereich. Mittels einer derart ausgebildeten Beschichtung kann also der rote Strahlungsanteil der aus dem Flächenlichtleiter austretenden Strahlung gegenüber dem blauen Spektralanteil gezielt erhöht werden. Die Beschichtung reduziert also gezielt die Strahlungsauskopplung für die Strahlung im blauen Spektralbereich.

Eine derartige Beschichtung ist insbesondere für Flächenlichtleiter geeignet, bei denen die Streuung an Streustellen 4 so ausgeführt ist, dass sie für blaue Strahlung zu einer effektiveren Streuung in vergleichsweise kleine Winkel zur Normalen des Flächenlichtleiters führt. In diesem Fall ist eine Ausdehnung der Streustellen 4 vorzugsweise klein gegenüber der Wellenlänge der im Lichtleitbereich 3 propagierenden Strahlung.

Dieses Kriterium ist insbesondere erfüllt, wenn eine Peak-Wellenlänge im Flächenlichtleiter mindestens fünf Mal so groß ist wie die Ausdehnung der Streustellen, so dass überwiegend Rayleigh-Streuung auftritt. Diese weist für Strahlung hoher Frequenz, also Strahlung kleiner Wellenlänge, einen größeren Streuquerschnitt auf.

Durch die Beschichtung kann also die aufgrund der wellenlängenabhängigen Rayleigh-Streuung auftretende Farbinhomogenität des Flächenlichtleiters kompensiert werden.

Der in Figur 5B gezeigten Simulation liegt eine Beschichtung 5 zugrunde, die drei Schichten aus Tantalpentoxid (Ta₂O₅) mit einer Dicke von jeweils 21,43 nm aufweist, wobei zwischen diesen drei Schichten jeweils eine Siliziumoxid-Schicht(SiO₂) mit einer Dicke von jeweils 44,58 nm angeordnet ist. Eine vergleichbare Wellenlängenabhängigkeit der Beschichtung ist jedoch auch mit Schichtfolgen erreichbar, deren Materialien und/oder Schichtdicken hiervon abweichen.

Als Materialien eignen sich für die Beschichtung 5 insbesondere dielektrische Materialien, die im sichtbaren Spektralbereich transparent sind. Beispielsweise kann das dielektrische Material ein Oxid, etwa Aluminiumoxid, Siliziumoxid oder Tantalpentoxid, ein Nitrid, etwa Siliziumnitrid, oder ein Oxinitrid, etwa Siliziumoxinitrid, enthalten.

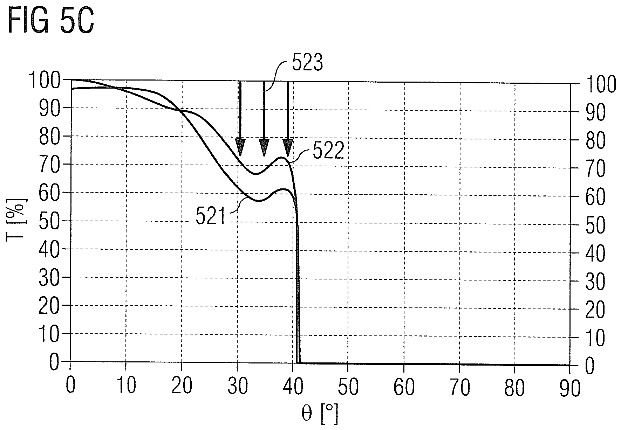

In Figur 5C ist ein Ausführungsbeispiel für eine Beschichtung gezeigt, bei der die Beschichtung für Winkel nahe des Winkels für Totalreflexion gegenüber einer unbehandelten Glas-Luft-Grenzfläche eine gezielt reduzierte Transmission aufweist. Dies wird in Figur 5C anhand der Pfeile 523 verdeutlicht.

Die Graphen 521 und 522 zeigen, dass sowohl für Strahlung im roten Spektralbereich als auch für Strahlung im blauen Spektralbereich die Transmission für Winkel zwischen etwa 20° und etwa 40° gegenüber einer unbehandelten Grenzfläche deutlich verringert ist. Mittels einer solchen Beschichtung 5 ist der Strahlungsanteil, der aus dem Flächenlichtleiter 1 unter vergleichsweise großen Winkeln, beispielsweise von 50° oder mehr, austritt, gezielt verringert, während die Transmission für Strahlung, die in kleinen Winkeln, beispielsweise von 0° bis 15°, praktisch ungehindert durch die Beschichtung hindurch tritt. In ausgeschaltetem Zustand erscheint der Flächenlichtleiter 1 aufgrund der Beschichtung bläulich oder cyan-farben.

Mittels einer solchen Beschichtung 5 kann also eine Abstrahlung des Flächenlichtleiters 1 unter großen Winkeln gezielt verringert werden. Ein solcher Flächenlichtleiter eignet sich beispielsweise für einen Flächenstrahler, der zur Deckenbeleuchtung vorgesehen ist. Bei Deckenleuchten würde unter großen Winkeln austretende Strahlung zu einer erhöhten Blendung führen und ist daher unerwünscht.

Weiterhin eignet sich eine derartige Beschichtung 5 insbesondere zur Homogenisierung der aus der Strahlungsaustrittsfläche eines Flächenlichtleiters austretenden Strahlung, bei dem im Lichtleitbereich Streustellen ausgebildet sind, die ein Auskoppeln der Strahlung in vergleichsweise großen Winkeln zur Normalen der Haupterstreckungsebene begünstigen. Dies ist beispielsweise bei Verwendung von Streustellen der Fall, die gegenüber der Wellenlänge im Lichtleitbereich eine vergleichsweise große Ausdehnung aufweisen, die beispielsweise mindestens fünffach so groß sind wie die Wellenlänge der Strahlung im Lichtleitbereich. An solchen Streustellen tritt überwiegend Vorwärtsstreuung auf, sodass die wegen der seitlichen Einkopplung in vergleichsweise großen Winkeln zur Normalen der Haupterstreckungsebene in den Lichtleitbereich eingekoppelte Strahlung bei der Streuung nur vergleichsweise geringe Winkeländerungen erfährt. Daher würde die Strahlung zu einem überhöhten Anteil in einem Winkelbereich nahe des Grenzwinkels für Totalreflexion aus dem Lichtleitbereich austreten.

Durch die Verwendung von Streustellen mit vergleichsweise großer Ausdehnung in Verbindung mit der beschriebenen Beschichtung kann also eine Abstrahlung erzielt werden, die bezogen auf die Winkelabhängigkeit eine hohe Homogenität aufweist. Gleichzeitig kann die Leuchtdichte auch bezüglich der Wellenlänge der abgestrahlten Strahlung besonders homogen ausgebildet sein, da die Streuwirkung bei vergleichsweise großen Partikeln eine nur geringe Wellenlängenabhängigkeit aufweist.

Der in Figur 5C dargestellten Simulation liegt eine alternierende Schichtfolge von fünf Tantalpentoxid-Schichten und vier dazwischen angeordneten Siliziumoxid-Schichten, wobei die Schichtdicken von der Glas-Grenzfläche aus gesehen die folgenden Werte betragen: 130,71 nm, 182,86 nm, 211,15 nm, 35,37 nm, 120,05 nm, 155,14 nm, 154,10 nm, 185,23 nm und 133,85 nm.

In dem Ausführungsbeispiel gemäß der Figur 5B und in dem Beispiel gemäß der Figur 5C für die Beschichtung liegen die folgenden Brechungsindizes zugrunde:
Glas: 1,51987; Tantalpentoxid 2,14318; Siliziumoxid: 1,46109.

Die Streustellen 4 können beispielsweise mittels Partikeln gebildet sein, die in den Lichtleitbereich eingebettet sind. Die Partikel können als Hohlkörper, beispielsweise als luftgefüllte Partikel, oder massiv ausgeführt sein. Alternativ oder ergänzend können die Streustellen auch mittels Hohlräumen oder Defekten im Lichtleitbereich gebildet sein. Derartige Streustellen können beispielsweise mittels gezielten lokalen Verdampfens von Material des Lichtleitbereichs, etwa mittels Laserstrahlung, ausgebildet werden.

Weiterhin kann die Beschichtung 5 alternativ oder ergänzend ein elektrochromes Material enthalten. Solche Materialien weisen in reduziertem und in oxidiertem Zustand aufgrund unterschiedlicher Absorptionseigenschaften eine unterschiedliche Farbwirkung auf. Beispielsweise kann Polyanilin (reduziert: farblos / oxidiert: grün), Poly-o-Phenylendiamin (farblos / rotbraun), Polythiophen (grün / braun), Poly-3-Methylthiophen (rot / blau), 3,4-Polyethylendioxythiophen (dunkelblau / hellblau), Polypyrrol (gelb / blauviolett) oder 3,4-Polyethylen-dioxypyrrol (rot / farblos) Anwendung finden. Da solche Materialien zumindest in einem Zustand im sichtbaren Spektralbereich absorbierend sind, ist die Verwendung solcher Materialien insbesondere für Flächenlichtleiter zweckmäßig, für die im ausgeschalteten Zustand eine möglichst hohe Transparenz nicht erforderlich ist.

Alternativ oder ergänzend kann für den Flächenlichtleiter 1 auch ein phosphoreszierendes Material Anwendung finden, das zur zumindest teilweisen Konversion von Strahlung der Strahlungsquelle 2 vorgesehen ist. Das phosphoreszierende Material kann beispielsweise in Form einer Beschichtung, beispielsweise der Seitenfläche 33, der ersten Hauptfläche 31, der zweiten Hauptfläche 32 oder der Strahlungsaustrittsfläche 10 ausgebildet sein. In ausgeschaltetem Zustand kann dies den Flächenlichtleiter 1 je nach verwendetem Material beispielsweise gelblich oder grünlich erscheinen lassen.

Die Erfindung ist nicht durch die Beschreibung anhand der Ausführungsbeispiele beschränkt. Vielmehr umfasst die Erfindung jedes neue Merkmal sowie jede Kombination von Merkmalen, was insbesondere jede Kombination von Merkmalen in den Patentansprüchen beinhaltet, auch wenn dieses Merkmal oder diese Kombination selbst nicht explizit in den Patentansprüchen oder den Ausführungsbeispielen angegeben ist.

## Patentansprüche

1. Flächenlichtleiter (1) mit einer entlang einer Haupterstreckungsebene des Flächenlichtleiters verlaufenden Strahlungsaustrittsfläche (10) und mit einem Lichtleitbereich (3), der Streustellen (4) und eine auf einer ersten Hauptfläche (31) des Lichtleitbereichs angeordnete Beschichtung (5) aufweist, wobei eine entlang der Haupterstreckungsebene eingekoppelte und nach Streuung an den Streustellen (4) auf die erste Hauptfläche (31) auftreffende Strahlung einen überhöhten Strahlungsanteil aufweist und die Beschichtung (5) einen Austritt des überhöhten Strahlungsanteils aus der Strahlungsaustrittsfläche (10) gezielt reduziert, wobei
die Beschichtung eine Transmission für Winkel zwischen 20° und 40° für Strahlung im roten und blauen Spektralbereich gegenüber einer unbehandelten Grenzfläche verringert und auftreffende Strahlung in einem Winkel zwischen 0° und 15° nahezu ungehindert austritt und die Streustellen (4) groß gegenüber einer Wellenlänge der in den Flächenlichtleiter (1) eingekoppelten Strahlung im Lichtleitbereich (3) sind.

2. Flächenlichtleiter nach Anspruch 1,
bei dem die Streustellen mittels Partikeln gebildet sind.

3. Flächenlichtleiter nach einem der Ansprüche 1 bis 2,
bei dem die Streustellen mittels Hohlräumen oder Defekten im Lichtleitbereich gebildet sind.

4. Flächenlichtleiter nach einem der Ansprüche 1 bis 3,
bei dem auf der der Strahlungsaustrittsfläche abgewandten Seite des Lichtleitbereichs eine Reflektorschicht (6) ausgebildet ist.

5. Flächenlichtleiter nach einem der Ansprüche 1 bis 4,
bei dem auf einer der ersten Hauptfläche gegenüberliegenden zweiten Hauptfläche (32) des Lichtleitbereichs eine weitere Beschichtung (55) ausgebildet ist.

6. Flächenlichtleiter nach einem der Ansprüche 1 bis 5,
bei dem auf der der Strahlungsaustrittsfläche gegenüberliegenden Seite des Flächenlichtleiters eine weitere Strahlungsaustrittsfläche (15) ausgebildet ist, wobei die aus der weiteren Strahlungsaustrittsfläche austretende Strahlung hinsichtlich der Intensität und/oder des Farborts von der aus der Strahlungsaustrittsfläche austretenden Strahlung verschieden ist.

7. Flächenlichtleiter nach einem der Ansprüche 1 bis 6,
bei dem die Beschichtung als eine mehrschichtige dielektrische Beschichtung ausgeführt ist.

8. Flächenlichtleiter nach einem der Ansprüche 1 bis 7,
bei dem die Beschichtung ein phosphoreszierendes Material und/oder ein elektrochromes Material enthält.

9. Flächenlichtleiter nach einem der Ansprüche 1 bis 8,
bei dem die Beschichtung entlang der Haupterstreckungsebene des Flächenlichtleiters strukturiert ist, wobei eine Strukturgröße der Beschichtung vorzugsweise unterhalb des Auflösungsvermögens des menschlichen Auges liegt.

10. Flächenstrahler (100) mit zumindest einem Flächenlichtleiter (1) gemäß einem der Ansprüche 1 bis 9 und zumindest einer Strahlungsquelle (2), wobei die im Betrieb des Flächenstrahlers in den Flächenlichtleiter eingekoppelte Strahlung mittels der Strahlungsquelle erzeugt wird.

11. Flächenstrahler nach Anspruch 10, bei dem die Strahlungsquelle zumindest einen Halbleiterkörper (20) mit einem zur Erzeugung von Strahlung vorgesehenen aktiven Bereich (21) aufweist.

## Claims

1. Surface light guide (1) having a radiation exit surface (10) extending along a main extension plane of the surface light guide and having a light guide region (3) which comprises scattering locations (4) and a coating (5) arranged on a first main surface (31) of the light guide region, wherein a radiation coupled along the main extension plane and impinging on the first main surface (31) after scattering at the scattering locations (4) comprises an excessive portion of radiation and the coating (5) selectively reduces an exit of the excessive portion of radiation from the radiation exit surface (10), wherein
the coating reduces a transmission for angles between 20° and 40° for radiation in the red and blue spectral range compared with an untreated interface, and incident radiation exits almost unhindered at an angle between 0° and 15°, and the scattering locations (4) are large compared with a wavelength of the radiation coupled into the surface light guide (1) in the light guide region (3).

2. Surface light guide according to claim 1,
in which the scattering locations are formed by means of particles.

3. Surface light guide according to one of the claims 1 to 2, in which the scattering locations are formed by means of cavities or defects in the light guide region.

4. Surface light guide according to one of claims 1 to 3,
in which a reflector layer (6) is formed on the side of the light guide region facing away from the radiation exit surface.

5. Surface light guide according to one of claims 1 to 4,
in which a further coating (55) is formed on a second main surface (32) of the light guide region opposite the first main surface.

6. Surface light guide according to one of claims 1 to 5,
in which a further radiation exit surface (15) is formed on the side of the surface light guide opposite the radiation exit surface, wherein the radiation exiting from the further radiation exit surface is different from the radiation exiting from the radiation exit surface in terms of intensity and/or color locus.

7. Surface light guide according to one of claims 1 to 6,
in which the coating is implemented as a multilayer dielectric coating.

8. Surface light guide according to one of claims 1 to 7,
in which the coating comprises a phosphorescent material and/or an electrochromic material.

9. Surface light guide according to one of claims 1 to 8,
in which the coating is structured along the main extension plane of the surface light guide, wherein a structure size of the coating is preferably below the aligning power of the human eye.

10. Planar emitter (100) comprising at least one surface light guide (1) according to one of claims 1 to 9 and at least one radiation source (2), wherein the radiation coupled into the surface light guide during operation of the planar emitter is generated by means of the radiation source.

11. Planar emitter according to claim 10, in which the radiation source comprises at least one semiconductor body (20) having an active region (21) intended for generating radiation.

## Revendications

1. Guide de lumière de surface (1) avec une surface de sortie de rayonnement (10) s'étendant le long d'un plan d'extension principal du guide de lumière de surface et avec une zone de guide de lumière (3) qui présente des points de dispersion (4) et un revêtement (5) disposé sur une première surface principale (31) de la zone de guide de lumière, dans lequel un rayonnement couplé le long du plan d'extension principal et frappant la première surface principale (31) après dispersion aux points de dispersion (4) présente une composante de rayonnement excessive et le revêtement (5) réduit sélectivement une sortie de la composante de rayonnement excessive de la surface de sortie du rayonnement (10), dans lequel
le revêtement réduit une transmission pour des angles entre 20° et 40° pour le rayonnement dans le domaine spectral rouge et bleu par rapport à une interface non traitée et le rayonnement incident émerge à un angle entre 0° et 15° presque sans entrave et les points de dispersion (4) sont grands par rapport à une longueur d'onde du rayonnement couplé dans la guide de lumière de surface (1) dans la zone du guide de lumière (3).

2. Guide de lumière de surface selon la revendication 1,
dans lequel les points de dispersion sont formés au moyen de particules.

3. Guide de lumière de surface selon l'une des revendications 1 à 2,
dans lequel les points de dispersion sont formés au moyen de cavités ou de défauts dans la zone du guide de lumière.

4. Guide de lumière de surface selon l'une des revendications 1 à 3,
dans lequel une couche réfléchissante (6) est formée sur le côté de la zone du guide de lumière qui est opposé à la surface de sortie du rayonnement.

5. Guide de lumière de surface selon l'une des revendications 1 à 4,
dans lequel un autre revêtement (55) est formé sur une deuxième surface principale (32) de la zone du guide de lumière opposée à la première surface principale.

6. Guide de lumière de surface selon l'une des revendications 1 à 5,
dans lequel une autre surface de sortie du rayonnement (15) est formée sur le côté du guide de lumière de surface opposé à la surface de sortie du rayonnement, le rayonnement sortant de l'autre surface de sortie du rayonnement différant en intensité et/ou en chromaticité du rayonnement sortant de la surface de sortie du rayonnement.

7. Guide de lumière de surface selon l'une des revendications 1 à 6,
où le revêtement est mis en œuvre sous la forme d'un revêtement diélectrique multicouche.

8. Guide de lumière de surface selon l'une des revendications 1 à 7,
dans lequel le revêtement comprend un matériau phosphorescent et/ou un matériau électrochrome.

9. Guide de lumière de surface selon l'une des revendications 1 à 8,
dans lequel le revêtement est structuré le long du plan d'extension principal du guide de lumière de surface, dans lequel une dimension de structure du revêtement est de préférence inférieure au pouvoir de résolution de l'œil humain.

10. Emetteur de lumière de surface (100) comprenant au moins un guide de lumière de surface (1) selon l'une quelconque des revendications 1 à 9 et au moins une source de rayonnement (2), dans lequel le rayonnement couplé dans le guide de lumière de surface pendant le fonctionnement de l'emetteur de lumière de surface est généré au moyen de la source de rayonnement.

11. Emetteur de lumière de surface selon la revendication 10, dans lequel la source de rayonnement comprend au moins un corps semi-conducteur (20) ayant une région active (21) prévue pour générer un rayonnement.
